# FASCICULE DE BREVET EUROPEEN

(11) **EP 2 500 265 B1**
(45) Date de publication et mention de la délivrance du brevet: **21.08.2013**
(21) Numéro de dépôt: 12000761.2
(22) Date de dépôt: 06.02.2012
(51) Int. Cl.: B64C 13/04

(54) **Manette cyclique à transmission mécanique de commande d'un giravion, comprenant un bras de levier sélectivement amplifié en cas d'urgence**
Zyklischer Steuerknüppel mit mechanischer Übersetzung zum Steuern eines Drehflügelflugzeugs, der einen selektiv erweiterten Hebelarm für den Notfall umfasst
Cyclic joystick with mechanical transmission for controlling a rotorcraft, including a lever arm selectively amplified in the event of an emergency

(30) Priorité: 18.03.2011 FR 1100820
(43) Date de publication de la demande: 19.09.2012
(73) Titulaire: EUROCOPTER, 13725 Marignane Cédex (FR)
(72) Inventeur: Biest, Romuald, 84360 Lauris (FR); Convers, Robert, 13510 Eguilles (FR)
(74) Mandataire: GPI & Associés

(56) Documents cités:
- GB-A- 279 206
- US-A1- 2010 123 045

## Description

La présente invention est du domaine des aéronefs, giravions notamment, et relève plus particulièrement des systèmes de commande de transmission qui sont actionnés par l'homme pour piloter les directions de vol de l'aéronef, en tangage et en roulis notamment. L'invention relève plus spécifiquement des manettes de commande des directions de vol d'un aéronef, et notamment de commande d'une modification de l'angle d'incidence des pales d'un rotor équipant un giravion. Elle a notamment pour objet une manette cyclique à transmission mécanique de commande, de structure axialement ramassée intégrable à l'accoudoir d'un siège de pilotage.

Les giravions sont communément équipés de systèmes de commande à manoeuvre manuelle, pour permettre à un pilote de diriger le giravion. Parmi ces systèmes de commande, un levier de commande cyclique permet au pilote de modifier l'angle d'incidence des pales pour diriger le giravion à partir de commandes sélectives de vol, respectivement en tangage et en roulis. Le levier de commande est articulé sur un châssis, tel qu'agencé en boîtier ou analogue, en étant monté mobile en basculement suivant au moins deux directions de commande qui sont affectées à des commandes de vol respectives. Le levier de commande est en prise articulée sur le châssis à l'une de ses extrémités distale, et est muni à son autre extrémité libre proximale d'une poignée de préhension par le pilote. L'extrémité proximale est l'extrémité du levier de commande manipulable par le pilote, l'extrémité distale étant l'extrémité du levier de commande opposée à l'extrémité proximale. A partir d'un basculement du levier suivant l'une ou l'autre des directions de commande, un organe de transmission de commande correspondant est activé pour mettre en oeuvre un organe de puissance distant, un vérin hydraulique de servocommande notamment, qui est affecté à une commande de vol correspondante en tangage ou en roulis. L'organe de transmission est susceptible d'être du type mécanique, en étant agencé en tringle, en bielle, en gaine à billes, en câble ou organe de transmission mécanique à distance analogue, ou d'être du type électrique en étant agencé en contacteur relié à l'organe de puissance distant par une liaison filaire.

Parmi les leviers cycliques de commande, on connait les manches cycliques étendus plutôt réservés à une transmission mécanique des commandes et les manettes cycliques ramassées plutôt réservées à une transmission électrique des commandes. A titre indicatif, l'extension d'un manche cyclique est de l'ordre de trois à quatre fois celle d'une manette cyclique. Un manche cyclique, d'extension encombrante, est articulé à l'avant du siège et présente l'avantage de procurer une transmission de commande mécanique moins coûteuse qu'une transmission de commande électrique.

Un manche cyclique comporte un bras de levier conséquent qui est favorable à une transmission mécanique des commandes, et qui procure une aisance de manipulation pour le pilote. Le pilote dispose de l'ensemble de son bras pour manoeuvrer le manche cyclique avec une force adaptée, et peut ressentir directement les efforts de résistance générés par les organes de puissances distants à l'encontre de leur manoeuvre.

Une manette cyclique, de taille modeste, est implantable dans l'accoudoir d'un siège de pilotage sur lequel est installé le pilote, pour procurer un confort de commande avec une amélioration de la visibilité et de l'ergonomie globale du poste de pilotage, en libérant l'espace qui s'étend devant le pilote installé sur le siège. La manette cyclique est aisément manipulable en basculement suivant de faibles amplitudes et sans effort par le poignet du pilote, grâce à l'exploitation des moyens de transmission de type électrique et par la mise en oeuvre d'un dispositif électromécanique de simulation d'effort, qui est asservi aux organes de puissance distants pour reproduire les efforts de résistance qu'ils opposent à leur manoeuvre.

Idéalement, un compromis appréciable est obtenu en exploitant une manette cyclique axialement ramassée et intégrable à l'accoudoir, et en équipant la manette d'organes de transmission de type mécanique. Pour pallier l'insuffisance du bras de levier de la manette cyclique, un dispositif d'assistance à développement d'effort peut être interposé sur la chaîne de transmission entre la manette cyclique et l'organe de puissance distant. Cependant, cette solution n'est pas pleinement satisfaisante en l'état, et mérite d'être améliorée. Il est constaté qu'en cas de dysfonctionnement des dispositifs d'assistance, la manette cyclique devient difficilement utilisable.

Pour connaître un environnement technologique proche de la présente invention, on pourra par exemple se reporter aux documents EP0844171 (AEROSPATIALE) et US2008/0272243 (DECKER W.E.) qui décrivent des mécanismes de commande de vol d'un aéronef mettant en oeuvre une manette de commande.

On connaît aussi l'enseignement des documents suivants: EP 1 218 240 (BELL HELICOPTER TEXTRON INC) divulgue l'exploitation d'un dispositif permettant de moduler les lois d'efforts ressentis par le pilote sur son organe de commande. US 4 961 548 (ROCKWELL INT CORP) divulgue une colonne de support d'une manette de commande qui est montée télescopique sur le plancher d'un aéronef. Le document US 3 209 612 (HAMBURGER FLUGZEUGBRAU GMBH) décrit un manche qui est monté mobile longitudinalement au plancher d'un aéronef, pour procurer une commande de vol à partir de son déplacement.

Le document US 2010/0123045est considéré comme l'état de la technique le plus proche, divulgant les caractéristiques du préambule de la revendication 1, et présente un mécanisme de commande muni d'un manche coopérant avec un vérin de trim.

Le document GB 279 206 vise un mécanisme de commande pour protéger un pilote d'un moyen de commande en cas d'accident.

Le but de la présente invention est de proposer un mécanisme de commande des directions de vol d'un aéronef, et plus particulièrement d'un giravion à partir d'une modification de l'angle d'incidence des pales d'un rotor équipant le giravion. Plus spécifiquement, il est visé par la présente invention de proposer un tel mécanisme de commande comprenant une manette de commande, notamment cyclique, qui procure au pilote la faculté de diriger confortablement l'aéronef en cas d'une situation d'urgence selon laquelle au moins un dispositif d'assistance à développement d'efforts équipant la manette est défectueux.

Le mécanisme de la présente invention est un mécanisme de commande d'au moins une direction de vol d'un aéronef, giravion notamment, et plus particulièrement un mécanisme de commande d'au moins un organe distant à manoeuvrer par l'intermédiaire d'au moins un organe de transmission mécanique distante. L'organe distant est notamment un organe de puissance, à énergie hydraulique ou électrique par exemple, de manoeuvre d'une gouverne de l'aéronef et plus spécifiquement des pales d'un rotor équipant le giravion pour modifier leur angle d'incidence. L'organe de transmission mécanique est du type agencé en bielle, en tringle, en câble ou autre organe de transmission mécanique distante analogue. Ce mécanisme de commande comprend une manette de commande qui est axialement étendue et qui est montée à son extrémité distale sur une structure porteuse autour d'au moins un axe d'articulation suivant une orientation de basculement correspondante. Cette structure porteuse est notamment constituée d'un châssis qui est avantageusement agencé en boîtier ou organe analogue de montage de la manette en mobilité et d'installation intermédiaire de la manette sur l'accoudoir d'un siège de pilotage équipant l'aéronef.

La manette est alors montée sur la structure porteuse par l'intermédiaire d'au moins un organe d'articulation équipant cette manette, l'organe d'articulation étant à l'intérieur d'un logement de forme complémentaire que comporte la structure porteuse.

La manette est agencée à son extrémité proximale en poignée de préhension, pour permettre sa saisie par un pilote de l'aéronef installé sur le siège de pilotage afin de manoeuvrer en basculement la manette suivant au moins une direction entre une position spontanée de repos et une position de travail dans laquelle la manette actionne un organe distant à manoeuvrer.

La manette est de plus en prise sur au moins un organe de transmission mécanique distante, pour provoquer une manoeuvre de cet organe de transmission mécanique en conséquence d'un basculement de la manette autour du dit axe. L'organe de transmission mécanique est en liaison mécanique avec au moins un organe distant à manoeuvrer qui lui est affecté.

La manette est équipée d'au moins un dispositif d'assistance à sa mobilité par amplification d'effort, qui est placé sur le chemin de la transmission d'efforts entre la manette et l'organe distant à manoeuvrer. Le dispositif d'assistance est un dispositif qui génère une amplification d'effort à partir des forces développées par la manette sur l'organe de transmission en prise avec cette manette, pour pallier à la faiblesse de l'effet de levier qu'elle génère en raison de son extension modeste apte à autoriser raisonnablement son implantation sur l'accoudoir d'un siège de pilotage. Le caractère raisonnable de son implantation implique une manoeuvre confortable de la manette par un pilote installé sur le siège de pilotage à partir d'une mobilité de son poignet.

La manette est plus particulièrement à extension modeste en étant intégrable à un accoudoir d'un siège de pilotage, par l'intermédiaire de la structure porteuse qui est muni de moyens d'installation sur un tel accoudoir. La manette est en prise sur l'organe de transmission entre ses extrémités et de préférence à son extrémité distale opposée à l'extrémité proximale dotée de la poignée de préhension. La manette est articulée sur la structure porteuse entre ses extrémités autour d'au moins un axe d'articulation suivant une orientation de basculement correspondante, qui est susceptible d'être placé au plus proche de son extrémité distale pour optimiser le bras de levier que procure la manette entre son extrémité proximale et sa prise articulée sur la structure porteuse.

Selon une variante de réalisation préférée, l'extrémité distale de la manette est en prise sur l'organe de transmission en étant articulée sur la structure porteuse entre ses extrémités, de préférence au plus proche de son extrémité distale. Selon une autre variante de réalisation, la manette est inversement susceptible d'être articulée sur la structure porteuse à son extrémité distale et d'être en prise sur l'organe de transmission entre ses extrémités, de préférence au plus proche de son extrémité distale.

La manette est articulée sur la structure porteuse suivant au moins une orientation de basculement correspondante à une commande de vol. La manette est munie du dit organe d'articulation qui coopère avec au moins un logement de réception de cet organe d'articulation ménagé sur la structure porteuse. Structurellement, la manette est susceptible selon une variante d'être articulée en mobilité omnidirectionnelle sur la structure porteuse, tel que par l'intermédiaire d'une articulation en rotule selon laquelle un organe à portée sphérique forme l'organe d'articulation et une cage de forme complémentaire forme le logement. Une telle structure d'articulation omnidirectionnelle procure une mobilité de la manette en basculement suivant des directions affectées à des commandes de vol respectives, notamment en tangage et en roulis, voire encore une mobilité en rotation sur elle-même.

La manette étant notamment une manette cyclique pour giravion, il est préféré de limiter sa mobilité à deux orientations de basculement affectées à des commandes de vol respectivement relatives au tangage et au roulis. La manette étant articulée en rotule sur la structure porteuse, sa mobilité autour d'un couple d'orientations de basculement respectivement affectées à une commande de vol est par exemple limitée par des couloirs correspondants de guidage de la manette, qui sont ménagés sur la structure porteuse.

Selon une autre variante, la manette est susceptible d'être articulée sur la structure porteuse autour d'un ou de plusieurs axes d'articulation en pivotement suivant une direction de basculement qui leur est affectée en correspondance avec une commande vol dédiée, en tangage et en roulis notamment. De tels axes d'articulation forment les organes d'articulation de la manette sur la structure porteuse, qui comporte en correspondance des paliers de réception de ces axes d'articulation.

Le mécanisme de la présente invention est principalement reconnaissable en ce que la manette est agencée en organe télescopique manoeuvrable entre une position rétractée d'usage courant et une position déployée d'urgence dans laquelle la poignée est éloignée de l'axe d'articulation par rapport à sa position rétractée. L'organe télescopique formant la manette est muni de moyens de verrouillage en position rétractée d'usage courant, qui interdisent un passage de la manette en position déployée en l'absence d'une situation d'urgence. La manette est équipée de moyens de déploiement depuis la position rétractée vers la position déployée d'urgence. Une manoeuvre des moyens de verrouillage et une mise en oeuvre des moyens de déploiement en position déployée de la manette sont dépendantes d'un état défectueux du dispositif d'assistance.

Plus particulièrement, une désactivation des moyens de verrouillage libérant la manette et une activation des moyens de déploiement de la manette en position déployée sont rendues dépendantes d'une détection d'un état défectueux du dispositif d'assistance. Cette dépendance est susceptible d'être une dépendance mécanique et/ou électrique, ou encore être une dépendance de procédure de vol d'urgence selon laquelle le déverrouillage de la manette et son passage en position déployée est exclusivement autorisée au pilote en une situation d'urgence selon laquelle le dispositif d'assistance est défaillant et/ou défectueux.

En cours de pilotage de l'aéronef selon un protocole courant de vol, la manette est maintenue en position rétractée verrouillée d'usage courant par les moyens de verrouillage. L'organisation de la manette et sa fonctionnalité exclue son usage par le pilote en position déployée en l'absence d'une situation d'urgence définie par un état défectueux et/ou une défaillance de fonctionnement du dispositif d'assistance.

L'état défectueux du dispositif d'assistance est susceptible d'être constaté par le pilote directement par sensation au regard des efforts à fournir sur la manette pour opérer les commandes de vol et/ou à partir de moyens de détection d'une défaillance du dispositif d'assistance. En situation d'urgence, le pilote est apte à désactiver les moyens de verrouillage et à mettre en oeuvre les moyens de déploiement, à partir de moyens de commande manuelle et/ou à partir d'une commande générée par les dits moyens de détection.

En position rétractée de la manette, une défaillance et/ou un état défectueux du dispositif d'assistance contraint le pilote à fournir des efforts importants et inconfortables pour manoeuvrer les organes distants à partir de la manette. Le déverrouillage de la manette et son passage en position déployée procurent une augmentation de la distance de séparation entre la poignée et l'axe d'articulation de la manette sur la structure porteuse, par rapport à cette distance de séparation en position rétractée de la manette. Cette augmentation de distance de séparation procure au pilote un bras de levier accru qui lui permet de manoeuvrer la manette avec un confort suffisant, malgré une perte éventuelle de confort induite par l'élévation de la poignée par rapport à l'accoudoir du siège.

On notera qu'un tel accoudoir est couramment à hauteur réglable selon le pilote installé sur le siège, et que si la situation d'urgence le permet, le pilote dispose de la faculté de régler la position de l'accoudoir pour accroître son confort de manipulation de la manette en position déployée. Les efforts de commande que doit fournir le pilote au moyen de la manette en position déployée sont raisonnables et lui permettent de diriger l'aéronef avec précision malgré la défaillance et/ou l'état défectueux du dispositif d'assistance.

La manette est éventuellement agencée en organe télescopique bistable, en étant maintenue en position rétractée par les moyens de verrouillage et en position déployée par des moyens de blocage. Un tel agencement de la manette en organe bistable en position rétractée ou inversement en position déployée interdit sa manipulation par le pilote en variation continue de l'extension de l'organe télescopique. Une telle interdiction détermine la mise en position sélective de la manette rigoureusement soit en position rétractée soit inversement en position déployée. Le blocage de la manette en position déployée procure un confort de commande pour le pilote qui manipule une manette dont l'extension est stable, tant en position rétractée qu'en position déployée.

Les moyens de verrouillage et le cas échéant les moyens de blocage sont susceptibles d'être à commande manuelle par le pilote décelant une défaillance du dispositif d'assistance ou étant alerté par des moyens de détection de la situation d'urgence. Une telle commande manuelle est par exemple de type mécanique, électromécanique ou électrique, mettant en oeuvre un bouton de commande ou organe analogue monostable ou bistable actionnable manuellement par le pilote pour provoquer la manoeuvre d'au moins un organe de verrouillage.

Les moyens de verrouillage et le cas échéant les moyens de blocage sont encore susceptibles d'être à commande électrique. De tels moyens de commande électrique sont par exemple du type électromagnétique ou du type électromécanique, comprenant des moyens électriques d'activation des moyens de verrouillage constitués par exemple d'un dit organe de verrouillage. L'activation des moyens de commande électrique des moyens de verrouillage est susceptible d'être à commande manuelle par le pilote qui décèle une défaillance du dispositif d'assistance ou qui est alerté par des moyens de détection de la situation d'urgence, et/ou d'être placée sous la dépendance des moyens de détection d'une défaillance du dispositif d'assistance.

L'organe de verrouillage au moins est susceptible d'être un organe monostable ou bistable. Selon une variante, plusieurs organes de verrouillage sont affectés au maintien de la manette respectivement en position rétractée et en position déployée. Selon une autre variante préférée, l'organe de verrouillage est affecté au maintien de la manette en chacune de ses positions verrouillée et déployée. En position rétractée et/ou déployée de la manette, l'organe de verrouillage au moins est par exemple en prise conjointe entre au moins deux composants de la manette, qui sont montés mobiles l'un par rapport à l'autre suivant l'axe d'extension de la manette pour lui conférer son caractère télescopique. L'organe de verrouillage est manoeuvrable en rupture de prise avec l'un quelconque au moins des composants de la manette pour autoriser la mise en oeuvre des moyens de déploiement de la manette vers sa position déployée.

Selon une forme préférée de réalisation, les moyens de déploiement sont manoeuvrables par des moyens motorisés qui intègrent avantageusement les moyens de verrouillage et le cas échéant les moyens de blocage. Plus particulièrement, l'activation de la motorisation des moyens de déploiement induit une désactivation des moyens de verrouillage et des moyens de blocage. En l'absence d'une activation des moyens motorisés, la manette est rigoureusement maintenue par les moyens de manoeuvre au moins en position rétractée, sinon aussi et de préférence en position déployée. De tels moyens motorisés forment les moyens de verrouillage et/ou de blocage qui sont avantageusement confondus, en interdisant une manoeuvre des moyens de déploiement en l'absence d'une commande d'activation de ces moyens motorisés.

Les moyens de déploiement sont avantageusement agencés en mécanisme à écrou et vis qui sont respectivement portés indifféremment par au moins deux composants de la manette, qui sont montés mobiles l'un par rapport à l'autre suivant l'axe d'extension de la manette pour lui conférer son caractère télescopique. La mobilité de la manette procurant les commandes de vol exclut une mobilité en rotation sur elle-même, une telle mobilité en rotation étant réservée au déploiement de la manette. Selon une forme préférée de réalisation de structure simple, la vis est ménagée le long d'au moins une zone d'extension d'un composant de la manette et coopère avec un écrou porté par un autre composant de la manette.

Les moyens de déploiement sont de préférence manoeuvrables par des moyens motorisés dont la mise en oeuvre est placée sous la dépendance de moyens d'activation. Ces moyens d'activation sont susceptibles d'être à commande manuelle par le pilote ou d'être placés sous la dépendance de moyens de détection d'une défaillance de fonctionnement du dispositif d'assistance, mettant par exemple en oeuvre un capteur d'effort. Selon une forme de réalisation des moyens motorisés, ces moyens motorisés associent un rotor et un stator qui sont respectivement en prise indifféremment avec l'écrou ou avec la vis.

Selon un exemple simple d'agencement en organe télescopique de la manette, cette manette comprend une tige formant l'un de ses composants qui est montée axialement mobile à l'intérieur d'un fourreau formant un autre de ses composants. Le fourreau est solidaire d'un organe d'articulation qui équipe la manette et qui est monté mobile autour de l'axe d'articulation à l'intérieur d'un logement complémentaire que comporte la structure porteuse. La vis est avantageusement ménagée le long d'une zone axiale de la tige s'étendant à son extrémité distale, et l'écrou est porté par le fourreau en étant manoeuvrable en rotation, notamment par l'intermédiaire d'un rotor sur lequel il est en prise et qui coopère avec un stator porté par le fourreau.

Selon une variante de réalisation, les moyens de déploiement sont des moyens élastiquement déformables, par exemple constitués d'un ressort de compression ou d'une masse de matière élastiquement déformable, qui sont placés sous contrainte en position rétractée de la manette et qui sont spontanément extensibles pour provoquer le passage de la manette en position déployée en conséquence de sa libération par les moyens de verrouillage.

Selon une variante de réalisation, les moyens de verrouillage et le cas échéant les moyens de blocage sont du type par brochage entre le fourreau et la tige. Plus particulièrement, ledit organe de verrouillage est formé d'une broche mobile manoeuvrable entre une position de verrouillage dans laquelle la broche est conjointement en prise sur le fourreau et sur la tige et une position de déverrouillage dans laquelle la broche est en prise seulement sur l'un ou l'autre du fourreau et de la tige.

Des exemples de réalisation de la présente invention vont être décrits en relation avec les figures des planches annexées, dans lesquelles :
- la fig.1 est une illustration en perspective d'une forme de réalisation d'une manette cyclique pour giravion implantée sur un accoudoir d'un siège de pilotage.
- la fig.2 est une illustration en perspective d'un mécanisme de commande comprenant la manette représentée sur la fig.1, extraite de l'accoudoir.
- les fig.3 et fig.4 sont des illustrations schématiques en coupe axiale d'une manette cyclique de la présente invention selon des formes respectives de réalisation.

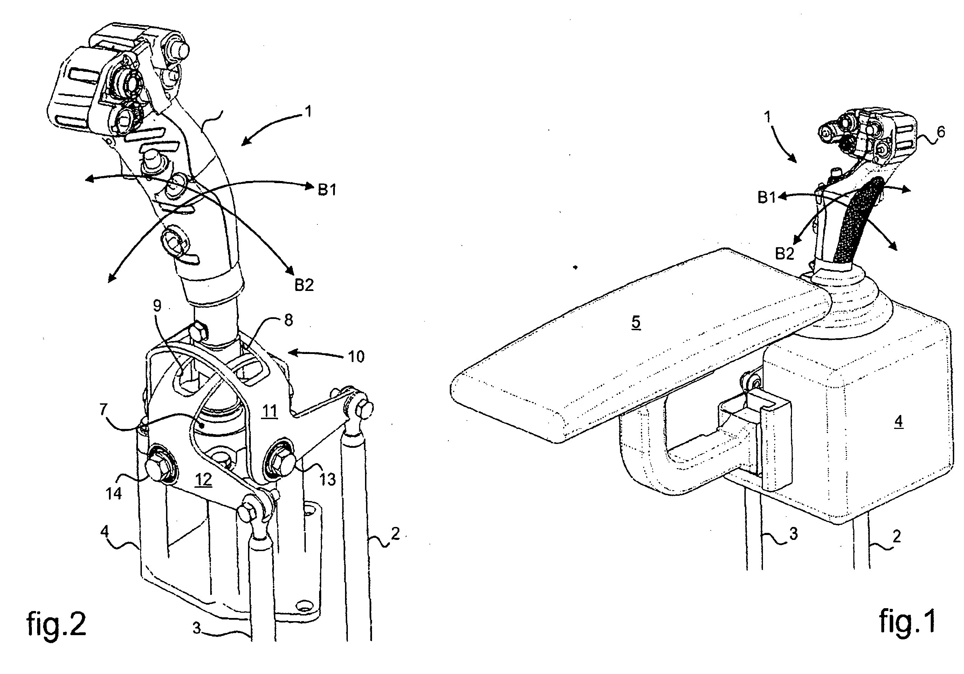

Sur les fig.1 et fig.2, une manette cyclique 1 permet de commander les directions de vol d'un giravion en modifiant l'angle d'incidence des pales d'un rotor dont il est équipé. Les commandes de vol permettent d'incliner le giravion en tangage et en roulis, chacune des commandes de vol étant pilotées à partir d'une manipulation de la manette 1 suivant des orientations de basculement B1,B2 respectives. La manette 1 est équipée d'organes de transmission mécanique 2,3 agencés en tringle et prévus pour être en prise sur des organes distants à manoeuvrer, pour provoquer la modification recherchée de l'angle d'incidence des pales. Pour chacune des orientations de basculement B1, B2 de la manette 1, un organe de transmission 2, 3 est manoeuvré en correspondance avec la commande de vol choisie par le pilote. La manette 1 est articulée sur une structure porteuse 4 intégrable à un accoudoir 5 d'un siège tel qu'illustré sur la fig.1, et est munie à son extrémité proximale d'une poignée de préhension 6 de la manette 1 par le pilote pour sa manipulation en basculement.

Sur la fig.2, la manette 1 est articulée sur la structure porteuse 4 à son extrémité distale par l'intermédiaire d'une articulation omnidirectionnelle agencée en rotule 7. La mobilité de la manette 1 sur la structure porteuse 4 est limitée suivant un couple d'orientations de basculement B1, B2 affectées à des commandes de vol respectives en tangage et en roulis. Cette limitation de mobilité est procurée à partir d'un guidage en translation de la manette 1 le long de couloirs 8,9 qui sont ménagés sur une cage 10 de la structure porteuse 4. Cette cage 10 est ménagée entre les extrémités de la manette 1 au plus proche de son extrémité distale, et comporte un couple d'éléments d'ancrage 11, 12 des organes de transmission 2,3 qui leur sont respectivement affectés. Ces éléments d'ancrage 11, 12 sont articulés en pivotement sur la structure porteuse 4 autour d'axes d'articulation 13, 14 respectifs, et sont agencés en coude aux extrémités desquels sont respectivement en prise les organes de transmission 2, 3 et la manette 1. Les éléments d'ancrage 11, 12 intègrent les couloirs 8, 9 de guidage de la manette 1, le couloir 8, 9 d'un élément d'ancrage 11,12 procurant un guidage de la manette 1 autour des orientations de basculement B1, B2 correspondantes à l'autre élément d'ancrage.

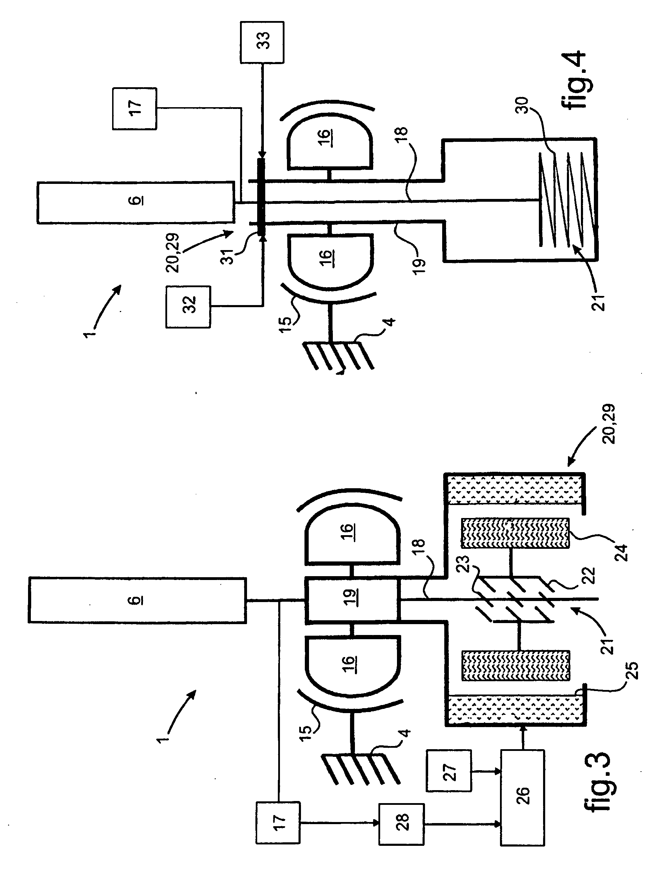

Sur les fig.3 et fig.4, une manette 1 cyclique est articulée sur une structure porteuse 4, par exemple selon des modalités analogues aux modalités décrites et représentées sur la fig.2. La structure porteuse 4 comporte un logement 15 de réception d'un organe d'articulation 16 dont est munie la manette 1 pour son articulation sur la structure porteuse 4. Sur l'exemple de réalisation illustré, le logement 15 et l'organe d'articulation 16 sont à portée sphérique procurant une mobilité omnidirectionnelle à la manette, susceptible d'être limitée selon les modalités décrites et représentées sur la fig.2. La manette 1 est en relation avec un dispositif d'assistance 17 à amplification d'efforts, pour pallier à la faiblesse du bras de levier qu'elle procure. En cas d'une défaillance et/ou d'un état défectueux du dispositif d'assistance 17, le bras de levier procuré par la manette 1 est insuffisant pour offrir un confort de pilotage satisfaisant et/ou pour pouvoir diriger avec précision le giravion. Il est définit une situation d'urgence correspondante à un tel état de dysfonctionnement du dispositif d'assistance 17, a contrario d'un usage courant de la manette 1 en l'absence d'un tel dysfonctionnement.

La manette 1 est agencée en organe télescopique, composée d'une tige 18 qui est montée axialement mobile en translation à l'intérieur d'un fourreau 19 de guidage. Il est définit la notion d'organe télescopique selon laquelle la manette 1 est extensible entre une position rétractée et une position déployée. En position rétractée, la manette 1 est ramassée suivant son orientation générale et en position déployée la dimension d'extension de la manette 1 suivant son orientation générale est supérieure à sa dimension d'extension correspondante en position rétractée. Les dimensions d'extension sont considérées entre la poignée de préhension 6 et la jonction articulée de la manette 1 sur la structure porteuse 4.

La tige 18 est munie à son extrémité proximale de la poignée de préhension 6 et coopère avec le fourreau 19 qui est solidaire de l'organe d'articulation 16. La manette 1 est équipée de moyens de verrouillage 20 en position rétractée et de moyens de déploiement 21 depuis sa position rétractée vers sa position déployée. Les moyens de verrouillage 20 sont normalement activés en situation d'usage courant de la manette 1 pour son maintien en position rétractée. En cas de dite situation d'urgence, les moyens de verrouillage 20 sont désactivés et les moyens de déploiement 21 sont mis en oeuvre pour provoquer le passage de la manette 1 depuis sa position rétractée vers sa position déployée.

Sur la fig.3, les moyens de déploiement 21 associent un écrou 22 porté par le fourreau 19 qui coopère avec une vis 23 ménagée au moins en partie le long de la manette 1, et plus particulièrement de la tige. L'écrou 22 est plus particulièrement solidaire d'un rotor 24 coopérant avec un stator 25 pour former des moyens motorisés 24, 25 de manoeuvre des moyens de déploiement 21. De tels moyens motorisés 24, 25 sont notamment organisés en moteur électrique monté sur le fourreau 19, dont la mise en oeuvre est placée sous la dépendance de moyens d'activation 26. Les moyens motorisés 24,25 sont susceptibles d'être installés dans une chambre que comporte le fourreau 19 pour leur réception, ou encore en prolongement du fourreau 19. Ces moyens d'activation 26 sont susceptibles d'être placés sous la dépendance d'un organe de commande manuelle 27 manoeuvrable par le pilote en cas de constat d'une défaillance et/ou d'un état défectueux du dispositif d'assistance 17. Isolément ou en combinaison, les moyens d'activation 26 sont encore susceptibles d'être placés sous la dépendance de moyens de détection 28 d'une défaillance et/ou d'un état défectueux du dispositif d'assistance 17.

Une activation des moyens motorisés 24,25 induit une mise en rotation du rotor 24, qui entraîne l'écrou 22 pour provoquer un déplacement axial de la tige 18 à l'intérieur du fourreau 19 et obtenir le déploiement de la manette 1. Les moyens motorisés 24,25 intègrent les moyens de verrouillage 20, et avantageusement des moyens de blocage 29 de la manette 1 en position déployée. En l'absence d'activation des moyens motorisés et notamment du moteur électrique, l'écrou 22 est maintenu immobile interdisant un déplacement axial de la tige 1 à l'intérieur du fourreau 19.

Sur la fig.4, les moyens de déploiement 21 sont du type à déformation élastique, et comprennent des moyens élastiquement déformables 30 qui sont placés en interposition axiale entre le fourreau 19 et la tige 18. De tels moyens élastiquement déformables 30 sont par exemple formés d'un ressort de compression tel qu'illustré, ou d'un quelconque corps apte à se déformer entre une position de mise sous contrainte et une position naturelle. En position rétractée, les moyens élastiquement déformables sont maintenus sous contrainte entre le fourreau 19 et la tige 18. Une désactivation des moyens de verrouillage 20 autorise une mobilité axiale de la tige 18 qui est spontanément déplacée par la libération des moyens élastiquement déformables 30 qui tendent à reprendre leur forme naturelle.

Les moyens de verrouillage 20 sont du type par brochage entre le fourreau 19 et la tige 18. En position de verrouillage, une broche 31 est en prise conjointe avec la tige 18 et le fourreau 19 pour maintenir la manette 1 en position rétractée. En position de déverrouillage, la broche 31 est libérée de l'un quelconque au moins de la tige 18 et du fourreau 19 pour autoriser une mobilité axiale de la tige 18 à l'intérieur du fourreau 19. Les moyens de verrouillage 20 sont susceptibles d'être exploités pour former des moyens de blocage 29 de la manette 1 en position déployée, à partir d'une mise en prise conjointe de la broche 31 avec la tige 18 et le fourreau 19. La broche 31 est susceptible d'être manoeuvrable manuellement par le pilote au moyen d'un bouton de commande 32, ou par l'intermédiaire de moyens motorisés 33.

## Revendications

1. Mécanisme de commande d'au moins une direction de vol d'un aéronef, ce mécanisme de commande comprenant une manette (1) de commande axialement étendue qui est montée sur une structure porteuse (4) autour d'au moins un axe d'articulation (13,14) et qui est agencée à son extrémité proximale en poignée de préhension (6), la manette (1) étant en prise sur au moins un organe de transmission (2,3) mécanique distante en liaison avec un organe distant à manoeuvrer et étant équipée d'au moins un dispositif d'assistance (17) par amplification d'effort,
**caractérisé en ce que** la manette (1) est agencée en organe télescopique muni de moyens de verrouillage (20) en position rétractée d'usage courant, et est équipée de moyens de déploiement (21) depuis la position rétractée vers une position déployée d'urgence, une manoeuvre des moyens de verrouillage (20) et une mise en oeuvre des moyens de déploiement (21) en position déployée de la manette (1) étant dépendantes d'un état défectueux du dispositif d'assistance (17).

2. Mécanisme de commande selon la revendication 1,
**caractérisé en ce que** la manette (1) est agencée en organe télescopique bistable, en étant maintenue en position rétractée par les moyens de verrouillage (20) et en position déployée par des moyens de blocage (29).

3. Mécanisme de commande selon l'une quelconque des revendications 1 à 2,
**caractérisé en ce que** les moyens de déploiement (21) sont manoeuvrables par des moyens motorisés (24,25) intégrant les moyens de verrouillage (20) et le cas échéant les moyens de blocage (29).

4. Mécanisme de commande selon l'une quelconque des revendications 1 à 3,
**caractérisé en ce que** les moyens de déploiement (21) sont manoeuvrables par des moyens motorisés (24,25) intégrant des moyens de blocage (29).

5. Mécanisme de commande selon l'une quelconque des revendications 1 à 4,
**caractérisé en ce que** les moyens de déploiement (21) sont agencés en mécanisme à écrou (22) et vis (23) qui sont respectivement portés indifféremment par au moins deux composants de la manette, qui sont montés mobiles l'un par rapport à l'autre suivant l'axe d'extension de la manette..

6. Mécanisme de commande selon la revendication 5,
**caractérisé en ce que** les moyens de déploiement (21) sont manoeuvrables par des moyens motorisés dont la mise en oeuvre est placée sous la dépendance de moyens d'activation (26), les moyens motorisés (24,25) associant un rotor (24) et un stator (25) qui sont respectivement en prise indifféremment avec l'écrou (22) ou avec la vis (23).

7. Mécanisme de commande selon la revendication 6,
**caractérisé en ce que** les moyens d'activation (26) sont à commande manuelle.

8. Mécanisme de commande selon la revendication 6, **caractérisé en ce que** les moyens d'activation (26) sont placés sous la dépendance de moyens de détection (28) d'une défaillance de fonctionnement du dispositif d'assistance (17).

9. Mécanisme de commande selon l'une quelconque des revendications 1 à 8,
**caractérisé en ce que** la manette (1) comprend une tige (18) montée axialement mobile à l'intérieur d'un fourreau (19) solidaire d'un organe d'articulation (16), l'organe d'articulation (16) équipant la manette (1) et étant monté mobile autour de l'axe d'articulation (13,14) à l'intérieur d'un logement (15) que comporte la structure porteuse (4).

10. Mécanisme de commande selon l'une quelconque des revendications 1 à 2,
**caractérisé en ce que** les moyens de déploiement (21) sont des moyens élastiquement déformables (30) qui sont placés sous contrainte en position rétractée de la manette (1) et qui sont spontanément extensibles pour provoquer le passage de la manette (1) en position déployée.

11. Mécanisme de commande selon la revendication 9,
**caractérisé en ce que** les moyens de verrouillage (20) et/ ou des moyens de blocage (29) sont du type par brochage (31) entre le fourreau (19) et la tige (18).

## Patentansprüche

1. Mechanismus zur Steuerung mindestens einer Flugrichtung eines Luftfahrzeugs, wobei dieser Steuermechanismus einen sich axial erstreckenden Steuerknüppel (1) aufweist, der um mindestens eine Schwenkachse (13, 14) schwenkbar auf einem Trägeraufbau (4) montiert ist und der an seinem proximalen Ende als Greiforgan (6) ausgebildet ist, wobei der Steuerknüppel (1) im Eingriff steht mit mindestens einem mechanischen Fernübertragungsorgan (2, 3), welches mit einem entfernten, zu betätigenden Organ verbunden ist und mit mindestens einer kraftverstärkenden Hilfsvorrichtung (17) ausgerüstet ist,
**dadurch gekennzeichnet, dass** der Steuerknüppel (1) als ein teleskopisches Organ ausgebildet ist mit Mitteln (20) zu dessen Verriegelung in einer zurückgezogenen Stellung bei üblicher Verwendung, und wobei der Steuerknüppel ausgerüstet ist mit Mitteln (21) zu seiner Entfaltung ausgehend von der zurückgezogenen Stellung in eine entfaltete Notstellung, wobei eine Betätigung der Vernegelungsmittel (20) und eine Aktivierung der Mittel (21) zur Entfaltung des Steuerknüppels (1) in eine entfaltete Stellung abhängig sind von einem defekten Zustand der Hilfsvorrichtung (17).

2. Steuermechanismus nach Anspruch 1,
**dadurch gekennzeichnet, dass** der Steuerknüppel (1) ausgebildet ist als ein bistabiles teleskopisches Organ, das durch die Verriegelungsmittel (20) in einer zurückgezogenen Stellung gehalten wird und durch Blockiermittel (29) in einer entfalteten Stellung gehalten wird.

3. Steuermechanismus nach einem der Ansprüche 1-2,
**dadurch gekennzeichnet, dass** die Mittel (21) zur Entfaltung durch motorisierte Mittel (24, 25) manövrierbar sind, die die Mittel zur Verriegelung (20), und gegebenenfalls die Blockiermittel (29) umfassen.

4. Steuermechanismus nach einem der Ansprüche 1-3,
**dadurch gekennzeichnet, dass** die Mittel (21) zur Entfaltung durch motorisierte Mittel (24, 25) manövrierbar sind, die Blockiermittel (29) umfassen.

5. Steuermechanismus nach einem der Ansprüche 1-4,
**dadurch gekennzeichnet, dass** die Mittel (21) zur Entfaltung als ein Schraube(23)-Mutter (22)-Mechanismus ausgebildet sind, die von mindestens zwei Bestandteilen des Steuerknüppels jeweils egal wie getragen werden, die entlang der Erstreckungsachse des Steuerknüppels relativ zueinander beweglich montiert sind.

6. Steuermechanismus nach Anspruch 5,
**dadurch gekennzeichnet, dass** die Mittel (21) zur Entfaltung durch motorisierte Mittel manövrierbar sind, deren Aktivierung von Aktivierungsmitteln (26) abhängig gemacht wird, wobei die motorisierten Mittel (24, 25) einen Rotor (24) und einen Stator (25) umfassen, die egal wie mit der Mutter (22) oder mit der Schraube (23) jeweils in Eingriff stehen.

7. Steuermechanismus nach Anspruch 6,
**dadurch gekennzeichnet, dass** die Aktivierungsmitteln (26) manuell betätigt werden.

8. Steuermechanismus nach Anspruch 6,
**dadurch gekennzeichnet, dass** die Aktivierungsmittel (26) abhängig gemacht werden von Mitteln (28) zur Erfassung eines Betriebsfehlers der Hilfsvorrichtung (17).

9. Steuermechanismus nach einem der Ansprüche 1-8,
**dadurch gekennzeichnet, dass** der Steuerknüppel (1) eine Stange (18) aufweist, die axial beweglich im Inneren einer Hülse (19) montiert ist, die an einem Gelenkorgan (16) befestigt ist, wobei das Gelenkorgan (16) zum Steuerknüppel (1) gehört und um die Gelenkachse (13, 14) beweglich im Inneren eines Lagers (15) angeordnet ist, das der Trägeraufbau (4) aufweist.

10. Steuermechanismus nach einem der Ansprüche 1-2,
**dadurch gekennzeichnet, dass** die Mittel (21) zur Entfaltung elastisch verformbare Mittel (30) sind, die in der zurückgezogenen Stellung des Steuerknüppels (1) vorgespannt sind und die spontan entfaltbar sind, um den Übergang des Steuerknüppels (1) in die entfaltete Stellung auszulösen.

11. Steuermechanismus nach Anspruch 9,
**dadurch gekennzeichnet, dass** die Verriegelungsmittel (20) und/oder Blockiermittel (29) vom Typ eines Zapfens (31) zwischen der Hülse (19) und dem Stift (18) sind.

## Claims

1. A mechanism for controlling at least one direction of flight of an aircraft, this control mechanism comprising an axially extending control joystick (1) which is mounted on a bearing structure (4) about at least one axis of articulation (13, 14) and is arranged at its proximal end in the form of a grippable handle (6), the joystick (1) engaging with at least one remote mechanical transmission member (2, 3) which is connected to a remote member to be manoeuvred, and being equipped with at least one assistance device (17) which acts by amplifying force,
**characterised in that** the joystick (1) is arranged in the form of a telescopic member equipped with locking means (20) which are in a retracted position in normal use, and is equipped with deployment means (21) for moving from the retracted position to an emergency deployment position, a manoeuvre of the locking means (20) and implementation of the deployment means (21) in the deployment position of the joystick (1) being dependent on the assistance device (17) being in a defective state.

2. A control mechanism according to Claim 1, **characterised in that** the joystick (1) is arranged in the form of a bistable telescopic member, being kept in the retracted position by the locking means (20) and in the deployment position by blocking means (29).

3. A control mechanism according to any one of Claims 1 to 2, **characterised in that** the deployment means (21) are manoeuvrable by motorised means (24, 25) that include the locking means (20) and where appropriate the blocking means (29).

4. A control mechanism according to any one of Claims 1 to 3, **characterised in that** the deployment means (21) are manoeuvrable by motorised means (24, 25) that include the blocking means (29).

5. A control mechanism according to any one of Claims 1 to 4, **characterised in that** the deployment means (21) are arranged in the form of a mechanism comprising a nut (22) and a screw (23) which are respectively borne by at least two components of the joystick, it being immaterial which is borne by which, these components being mounted such that they are movable in relation to one another along the axis of extension of the joystick.

6. A control mechanism according to Claim 5, **characterised in that** the deployment means (21) are manoeuvrable by motorised means whereof implementation is dependent on activation means (26), the motorised means (24, 25) providing a coupling between a rotor (24) and a stator (25) which respectively engage with the nut (22) or the screw (23), it being immaterial which engages with which.

7. A control mechanism according to Claim 6, **characterised in that** the activation means (26) are controlled manually.

8. A control mechanism according to Claim 6, **characterised in that** the activation means (26) are dependent on means (28) for detecting the failure of operation of the assistance device (17).

9. A control mechanism according to any one of Claims 1 to 8, **characterised in that** the joystick (1) comprises a rod (18) mounted such that it is axially movable inside a sleeve (19) which is attached to an articulation member (16), wherein the articulation member (16) is installed on the joystick (1) and is mounted to be movable about the axis of articulation (13, 14) inside a housing (15) which the bearing structure (4) comprises.

10. A control mechanism according to any one of Claims 1 to 2, **characterised in that** the deployment means (21) are elastically deformable means (30) which are put under tension in the retracted position of the joystick (1) and are capable of extending automatically to bring about movement of the joystick (1) into the deployment position.

11. A control mechanism according to Claim 9, **characterised in that** the locking means (20) and/or blocking means (29) are of the type operating by means of a pin (31) between the sleeve (19) and the rod (18).
